# EUROPÄISCHE PATENTSCHRIFT

(11) **EP 2 475 956 B1**
(45) Veröffentlichungstag und Bekanntmachung des Hinweises auf die Patenterteilung: **03.12.2014**
(21) Anmeldenummer: 10737025.6
(22) Anmeldetag: 22.07.2010
(51) Int. Cl.: G01B 11/25, G01B 11/275

(54) **LASERPROJEKTOR ZUR FAHRWERKSVERMESSUNG**
LASER PROJECTOR FOR WHEEL ALIGNMENT
PROJECTEUR À LASER POUR LE MESURAGE D'UN SYSTÈME DE SUSPENSION

(30) Priorität: 07.09.2009 DE 102009029234
(43) Veröffentlichungstag der Anmeldung: 18.07.2012
(73) Patentinhaber: Robert Bosch GmbH, 70442 Stuttgart (DE)
(72) Erfinder: NOBIS, Guenter, 72622 Nuertingen (DE); ABRAHAM, Steffen, 31134 Hildesheim (DE); GEBHARD, Matthias, 70563 Stuttgart (DE); KALLMANN, Ulrich, 72076 Tuebingen (DE)
(86) Internationale Anmeldenummer: PCT/EP2010/060629
(87) Internationale Veröffentlichungsnummer: WO 2011/026691

(56) Entgegenhaltungen:
- EP-A2- 0 321 965
- EP-A2- 0 355 839
- WO-A1-98/41824
- WO-A2-2006/065437
- WO-A2-2007/040877
- US-A- 4 663 760
- US-A- 5 193 120
- US-A- 5 200 597
- US-A- 5 835 121
- US-A1- 2005 254 044
- US-A1- 2009 185 274
- US-B1- 6 657 711

## Beschreibung

### Stand der Technik

Die Erfindung betrifft einen Laserprojektor zur Fahrwerksvermessung.

Die Verwendung von Laserstrahlung zur Fahrwerksvermessung ist im Stand der Technik bekannt. Da die Wechselwirkung von Laserstrahlung mit biologischem Gewebe zu dessen Schädigung führen kann, sind Schutzmaßnahmen erforderlich, um die von einer Laserlichtquelle ausgehenden Gefahren zu minimieren.

Die Schutzmaßnahmen sollen die Zugänglichkeit zu gefährlicher Strahlung verhindern und auch im Fehlerfall entsprechenden Schutz gewährleisten.

Bekannte Laserschutzeinrichtungen weisen ein Schutzgehäuse auf, das keinerlei Laserstrahlung in die Umgebung entlässt und den Betrieb des Lasers beim Öffnen des Schutzgehäuses unterbricht.

Ein solches Schutzgehäuse ist jedoch für die Anwendung in der Fahrwerksvermessung nicht geeignet, da Laserstrahlung dort für Mess- und Projektionszwecke auch außerhalb eines Schutzgehäuses zur Verfügung stehen muss. Beispiele hierfür sind optische Fahrwerksvermessungssysteme, Laserprojektionseinrichtungen und Laser-Abstandsmessgeräte.

Eine weitere Laserschutzvorrichtung ist in der WO 2007/040877 gezeigt, in welcher die Leistung des Lasers mit der Leistung des Lasers im Kalibrierungsmodus vergleicht. Das Dokument US 2009/0185274 zeigt einen Apparat zur Projektion eines ersten und eines zweiten Beugungsmusters.

Eine Aufgabe der Erfindung ist daher die Schaffung einer verbesserten Vorrichtung zur Bereitstellung von Laserstrahlung für die Fahrwerksvermessung, von der auch im Falle einer Fehlfunktion keine Gefahr für den Benutzer ausgeht.

### Offenbarung der Erfindung

Die Aufgabe wird von einem Laserprojektor und einem Verfahren zum Betreiben eines Laserprojektors nach einem der unabhängigen Patentansprüche gelöst. Die abhängigen Patentansprüche beschreiben vorteilhafte Ausgestaltungen der Gegenstände der unabhängigen Patentansprüche.

Ein erfindungsgemäßer Laserprojektor zur Fahrwerksvermessung hat eine Laserlichtquelle, die zum Aussenden eines Laserlichtstrahls ausgebildet ist, und ein optisches Element, das so ausgebildet ist, dass es ein strukturiertes Laserlichtmuster mit einer Beugung 0ter Ordnung erzeugt, wenn es von dem Laserlichtstrahl bestrahlt wir. Der Laserprojektor hat auch einen Detektor, der so angeordnet ist, dass er im Betrieb der Laserlichtquelle von einem Teilbereich des strukturierten Laserlichtmusters, welcher eine sehr hoher Intensität durch die Beugung 0ter Ordnung aufweisst, bestrahlt wird und dabei ein mit der Bestrahlung korreliertes Ausgangssignal erzeugt. Der Laserprojektor hat auch eine Auswerteinrichtung, die das von dem Detektor erzeugte Ausgangssignal mit wenigstens einem vorgegebenen Sollwert vergleicht und die Laserlichtquelle abschaltet, wenn eine Abweichung vom vorgegebenen Sollwert festgestellt wird, die einen vorgegebenen Grenzwert überschreitet.

In einem erfindungsgemäßen Laserprojektor wird eine Fehlfunktion, d. h. ein Abweichen der Intensität des von dem Detektor detektierten Teilbereichs des strukturierten Laserlichtmusters von einem vorgegebenen Sollwert erkannt und die Laserlichtquelle wird abgeschaltet, wenn eine solche Fehlfunktion erkannt wird. Dadurch, dass die Laserlichtquelle beim Erkennen einer Fehlfunktion abgeschaltet wird, wird die Sicherheit beim Betrieb des Laserprojektors erhöht.

Dadurch, dass der Detektor von einem Teilbereich des Laserlichtmusters mit sehr hoher Strahlungsintensität bestrahlt wird und dieser Teilbereich aus dem Laserlichtmuster ausgeblendet wird, wird die Sicherheit weiter erhöht, da von einem Bereich mit hoher Strahlungsintensität eine besondere Gefahr ausgeht und diese Gefahr durch Ausblenden des besonders strahlungsintensiven Teilbereichs reduziert wird.

Durch Umlenken des Laserlichtmusters mit Hilfe eines Reflektors kann die Baulänge des Laserprojektors verringert werden. Ein Laserprojektor mit reduzierter Baulänge kann besonders gut an vorgegebene Raumverhältnisse angepasst und insbesondere auch in engen Werkstattbereichen benutzt werden.

In einer Ausführungsform weist der Laserprojektor ein Gehäuse auf, wobei wenigstens ein Bereich des Gehäuses transparent ausgebildet ist. Durch ein Gehäuse werden die Bauteile des Laserprojektors vor externen Einflüssen, wie z. B. Schmutz oder Feuchtigkeit, geschützt und die Umgebung wird von der besonders intensiven Strahlung des Laserlichtstrahls in der Nähe des optischen Elements geschützt. Dadurch, dass wenigstens ein Bereich des Gehäuses transparent ausgebildet ist, kann das von dem optischen Element erzeugte Laserlichtmuster aus dem Gehäuse austreten und zu Mess- und/oder Projektionszwecken verwendet werden.

In einer Ausführungsform ist der Detektor innerhalb des Gehäuses angeordnet. Dadurch wird der Detektor von dem Gehäuse vor schädlichen Umwelteinflüssen geschützt. Darüber hinaus verbleibt die von dem Detektor reflektierte und aus dem Laserlichtmuster ausgeblendete Strahlung im Inneren des Gehäuses, so dass die Umgebung vor der besonders intensiven Strahlung, die von dem Detektor ausgeblendet und ggf. reflektiert wird, geschützt ist.

In einer Ausführungsform ist der Detektor an einer Wand des Gehäuses angebracht. Dies ermöglicht eine besonders einfache und sichere Befestigung des Detektors im Inneren des Gehäuses.

In einer Ausführungsform weist der Laserprojektor wenigstens einen Reflektor auf, der so angeordnet ist, dass er wenigstens einen Teilbereich des strukturierten Laserlichtmusters auf den Detektor umlenkt.

Durch die Verwendung eines Reflektors, der einen Teilbereich des Laserlichtmusters umlenkt, kann die Montagestelle des Detektors flexibel gewählt werden. Insbesondere kann der Detektor außerhalb des von dem strukturierten Laserlichtmuster bestrahlten Bereichs angeordnet werden.

In einer Ausführungsform ist der Reflektor an einer Wand des Gehäuses angebracht. An einer Wand des Gehäuses lässt sich der Reflektor besonders einfach und kostengünstig befestigen.

In einer Ausführungsform eines Laserprojektors mit einem Reflektor ist in dem Reflektor eine Aussparung oder Öffnung so ausgebildet, dass wenigstens ein Bereich des Laserlichtmusters nicht durch den Reflektor umgelenkt wird, sondern durch die Aussparung bzw. Öffnung durch den Reflektor hindurch tritt. Dadurch ist es besonders einfach, einen Bereich aus dem umgelenkten Laserlichtmuster auszublenden. Insbesondere kann ein besonders strahlungsintensiver Bereich aus dem Laserlichtmuster ausgeblendet werden, um die von besonders intensiver Laserstrahlung ausgehende Gefahr zu verringern. Zusätzlich ist auf der von der Laserlichtquelle abgewandten Seite des Reflektors ein Detektor so angeordnet, dass er beim Betrieb der Laserlichtquelle durch den durch die Aussparung des Reflektors tretenden Teilbereich des Laserlichtmusters bestrahlt wird und ein mit der Strahlung korreliertes Ausgangssignal erzeugt. Dadurch kann der Betrieb des Laserprojektors besonders einfach und effektiv überwacht werden.

Erfindungsgemäß ist der Detektor mit einer Auswerteinrichtung verbunden, die das von dem Detektor erzeugte Ausgangssignal mit wenigstens einem vorgegebenen Sollwert vergleicht und die Laserlichtquelle abschaltet, wenn sie eine signifikante Abweichung des von dem Detektor erzeugten Ausgangssignals vom vorgegebenen Sollwert feststellt. Dadurch, dass die Laserlichtquelle bei einer Fehlfunktion, bei der das von dem Detektor erzeugte Ausgangssignal von einem vorgegebenen Sollwert abweicht, abgeschaltet wird, wird die Sicherheit des Laserprojektors erhöht.

In einer Ausführungsform ist die Aussparung in einem Bereich des Reflektors angeordnet, der im Betrieb der Laserlichtquelle von einem Teilbereich des Laserlichtmusters mit einer hohen Strahlungsintensität bestrahlt wird. Dadurch wird ein Bereich mit sehr hoher Strahlungsintensität aus dem Laserlichtmuster ausgeblendet. Da das aus dem Laserprojektor austretende Laserlichtmuster den Bereich mit sehr hoher Strahlungsintensität nicht mehr umfasst, wird die Sicherheit beim Betrieb des Laserprojektors weiter erhöht.

Die Erfindung umfasst auch ein Verfahren zum Betrieb eines Laserprojektors, insbesondere eines erfindungsgemäßen Laserprojektors, bei dem die Laserlichtquelle in einem ersten Schritt mit einem Vorpuls so angesteuert wird, dass sie Laserlicht mit einer ersten Lichtleistung bzw. Intensität aussendet. Wenigstens ein Teil des durch den Vorpuls erzeugten Laserlichts wird von einem Detektor erfasst und ein von dem Detektor erzeugtes Ausgangssignal, das mit dem erfassten Laserlicht korreliert ist, wird von einer Auswerteinheit ausgewertet. Wenn die Auswerteinheit bei der Auswertung keinen Fehler feststellt, wird die Laserlichtquelle in einem zweiten Schritt mit einem Hauptpuls so angesteuert, dass sie Laserlicht mit einer zweiten Lichtleistung bzw. Intensität aussendet, wobei die zweite Lichtleistung größer als die erste Lichtleistung ist und/oder durch den Hauptpuls eine längeres Laserlichtsignal als durch den Vorpuls ausgesendet wird.

Ein solches erfindungsgemäßes Verfahren ermöglicht einen besonders sicheren Betrieb des Laserprojektors, da durch den Vorpuls, bei dem der Laserlichtstrahl eine reduzierte Intensität bzw. Dauer hat, von der keine Gefahr ausgeht, zunächst festgestellt wird, ob ein Fehler vorliegt, bevor ein Hauptpuls ausgelöst wird, durch den ein Laserlichtmuster erzeugt wird, das aufgrund seiner größeren Intensität bzw. Dauer im Falle einer Fehlfunktion sehr gefährlich. Zusätzlich wird die Laserlichtquelle abgeschaltet, wenn bei der Auswertung durch die Auswerteinheit ein Fehler festgestellt wird. Dadurch, dass die Laserlichtquelle nach dem Feststellen eines Fehlers abgeschaltet wird, wird die Sicherheit des Betriebs eines erfindungsgemäßen Laserprojektors noch weiter erhöht.

Die Erfindung wird im Folgenden anhand der beigefügten Figuren näher erläutert, dabei zeigt:
Figur 1 ein erstes Ausführungsbeispiel eines erfindungsgemäßen Laserprojektors,
Figur 2 ein zweites Ausführungsbeispiel eines erfindungsgemäßen Laserprojektors,
Figur 3 ein drittes Ausführungsbeispiel eines erfindungsgemäßen Laserprojektors,
Figur 4 ein viertes Beispiel eines Laserprojektors, welches nicht Gegenstand der Erfindung ist,
Figur 5 ein fünftes Ausführungsbeispiel eines erfindungsgemäßen Laserprojektors, und
Figur 6 ein Diagramm, welches den zeitlichen Verlauf der ausgesendete Lichtleistung in einem erfindungsgemäßen Verfahren zum Betrieb eines Laserprojektors beschreibt.

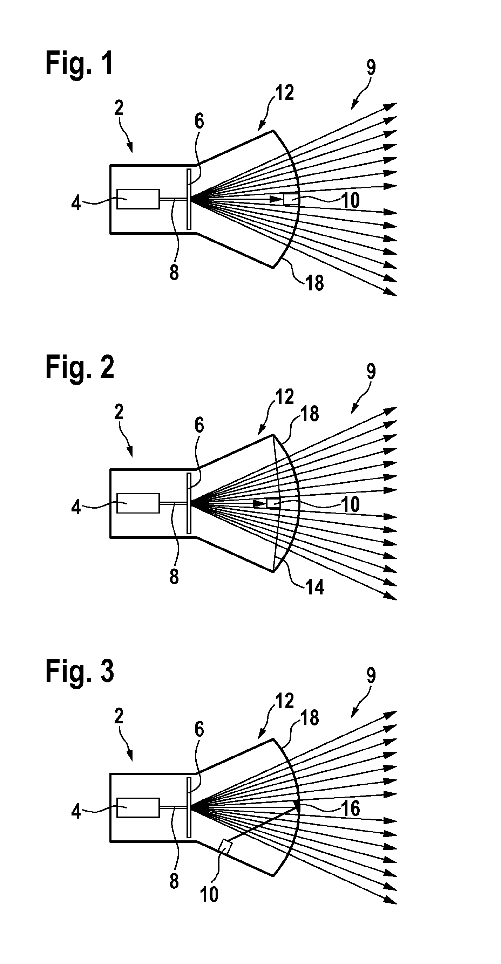

Figur 1 zeigt ein erstes Ausführungsbeispiel eines erfindungsgemäßen Laserprojektors 2 mit einer Laserlichtquelle 4, die im Betrieb einen Laserlichtstrahl 8 aussendet.

In einem Bereich des von der Laserlichtquelle 4 ausgesendeten Laserlichtstrahls 8 ist ein optisches Element 6, das z. B. als Brechungsgitter ausgebildet ist, vorgesehen. Das optische Element 6 erzeugt ein strukturiertes Laserlichtmuster 9, wenn es von dem Laserlichtstrahl 8 bestrahlt wird. Um die Laserlichtquelle 4 und das optische Element 6 ist ein Schutzgehäuse 12 ausgebildet. Das Schutzgehäuse 12 weist auf der Seite des optischen Elements 6, die der Laserlichtquelle 4 abgewandt ist, eine Wand 18 mit einem wenigstens teilweise transparent ausgebildeten Bereich auf, durch den das von dem optischen Element 6 erzeugte Laserlichtmuster 9 aus dem Schutzgehäuse 12 austritt, um für Mess- und/oder Projektionsaufgaben verwendet zu werden.

An einer Stelle des transparent ausgebildeten Bereichs, die von einem besonders strahlungsintensiven Bereich des Laserlichtmusters 9 bestrahlt wird (Beugung 0ter Ordnung), ist ein Detektor 10 angeordnet. Der Detektor 10 ist für Laserlicht undurchlässig, so dass ein besonders strahlungsintensive Bereich des Laserlichtmusters 9, der auf den Detektor 10 trifft, ausgeblendet wird und nicht durch den transparenten Bereich der Wand 18 aus dem Schutzgehäuse 12 austritt.

Darüber hinaus wird der besonders strahlungsintensive Bereich des Laserlichtmusters 9 von dem Detektor 10 erfasst und das von dem Detektor 10 in Reaktion auf das erfasste Laserlicht erzeugte Ausgangssignal wird in einer nicht gezeigten Auswerteinrichtung mit einem vorgegebenen Sollwert verglichen. Bei einer unzulässigen Abweichung des von dem Detektor 10 ermittelten Wertes von dem vorgegebenen Sollwert stellt die Auswerteinrichtung eine Fehlfunktion fest und schaltet die Laserlichtquelle 4 ab, um die Sicherheit beim Betrieb des Laserprojektors 2 zu gewährleisten.

Dadurch, dass der Detektor 10 direkt an der dem optischen Element 6 gegenüber liegenden Wand 18 des Schutzgehäuses 12 angebracht ist, ist keine zusätzliche Haltevorrichtung oder Befestigungsstruktur erforderlich. Der Detektor 10 ist besonders einfach und kostengünstig montierbar.

Figur 2 zeigt ein zweites Ausführungsbeispiel eines erfindungsgemäßen Laserprojektors 2, wobei der Laserprojektor ähnlich dem in der Figur 1 gezeigten ersten Ausführungsbeispiel eines erfindungsgemäßen Laserprojektors 2 aufgebaut ist. Die Elemente des Laserprojektors 2, die mit dem in der Figur 1 gezeigten Ausführungsbeispiel übereinstimmen, werden daher nicht erneut beschrieben.

Anders als in dem in der Figur 1 gezeigten Ausführungsbeispiel ist der Detektor 10 in dem in der Figur 2 gezeigten Ausführungsbeispiel nicht unmittelbar an der dem optischen Element 6 gegenüber liegenden, wenigstens teilweise transparent ausgebildeten Wand 18 des Schutzgehäuses 12 angebracht. Vielmehr ist zwischen dem optischen Element 6 und der Wand 18 des Schutzgehäuses 12 eine Befestigungsstruktur 14 vorgesehen. Der Detektor 10 ist so an der Befestigungsstruktur 14 angebracht, dass er von einem besonders strahlungsintensiven Bereich des von dem optischen Element 6 erzeugten Laserlichtmusters 9 bestrahlt wird.

Durch die Verwendung einer Befestigungsvorrichtung 14 kann der Detektor 10 näher an dem optischen Element 6 angebracht werden als im ersten Ausführungsbeispiel. Auch wird eine mechanische Beanspruchung des zumindest teilweise transparent ausgebildeten Bereichs der dem optischen Element 6 gegenüber liegenden Wand 18 des Schutzgehäuses 12 vermieden. Der Detektor 10 kann daher sicher befestigt werden, ohne dass die Gefahr besteht, die zumindest teilweise transparent ausgebildete Wand 18 zu beschädigen.

Die Befestigungsvorrichtung 14 kann mit einer Einstellvorrichtung ausgebildet sein, die es ermöglicht, die Position des Detektors 10 zu verstellen. Dadurch kann der Detektor 10 besonders einfach und effektiv so positioniert werden, dass er von einem gewünschten Bereich des Laserlichtmusters 9, insbesondere von einem besonders strahlungsintensiven Bereich des Laserlichtmusters 9, bestrahlt wird.

Die Funktionsweise des in der Figur 2 gezeigten Laserprojektors 2 entspricht der Funktionsweise des in der Figur 1 gezeigten ersten Ausführungsbeispiels.

Figur 3 zeigt ein drittes Ausführungsbeispiel eines erfindungsgemäßen Laserprojektors 2, bei dem zusätzlich ein Reflektor 16 vorgesehen ist. Der Reflektor 16 ist so angeordnet, dass er einen Bereich des von dem optischen Element 6 erzeugten Laserlichtmusters 9 auf einen Detektor 10 umlenkt, der in einem Bereich außerhalb des Laserlichtmusters 9 angeordnet ist. Durch die Verwendung eines Reflektors 16 kann der Detektor 10 in einem beliebigen Bereich außerhalb des Laserlichtmusters 9 angeordnet sein. Dadurch sind die Größe des Detektors 10 und die Verlegung seiner elektrischen Anschlüsse unproblematisch. Insbesondere müssen die elektrischen Anschlüsse des Detektors 10 nicht in einem Bereich verlegt werden, der im Betrieb von dem Laserlichtmuster 9 bestrahlt wird. Der Detektor 10 ist einfach zu befestigen, da er nicht am transparenten Bereich der Wand 18 befestigt wird.

In dem in der Figur 3 gezeigten Ausführungsbeispiel ist der Reflektor 16 unmittelbar an der dem optischen Element 6 gegenüber liegenden Wand 18 des Gehäuses 12 angebracht. In einem alternativen, nicht gezeigten Ausführungsbeispiel kann der Reflektor 16 auch an einer Befestigungsvorrichtung, die ähnlich wie die im zweiten Ausführungsbeispiel der Figur 2 gezeigte Befestigungsvorrichtung 14 ausgebildet und zwischen der Wand 18 des Gehäuses 12 und dem optischen Element 6 angeordnet ist, befestigt sein. Dadurch wird eine mechanische Beanspruchung der teilweise transparent ausgebildeten Wand 18 durch den Reflektor 16 vermieden.

Zusätzlich kann die Befestigungsvorrichtung 14 mit einer Stellvorrichtung ausgebildet sein, die es ermöglicht, die Position des Reflektors 16 zu verstellen. Dadurch kann der Reflektor 16 besonders einfach und effektiv so positioniert werden, dass er von dem gewünschten Bereich des Laserlichtmusters 9 bestrahlt wird und diesen Bereich auf den Detektor 10 umlenkt.

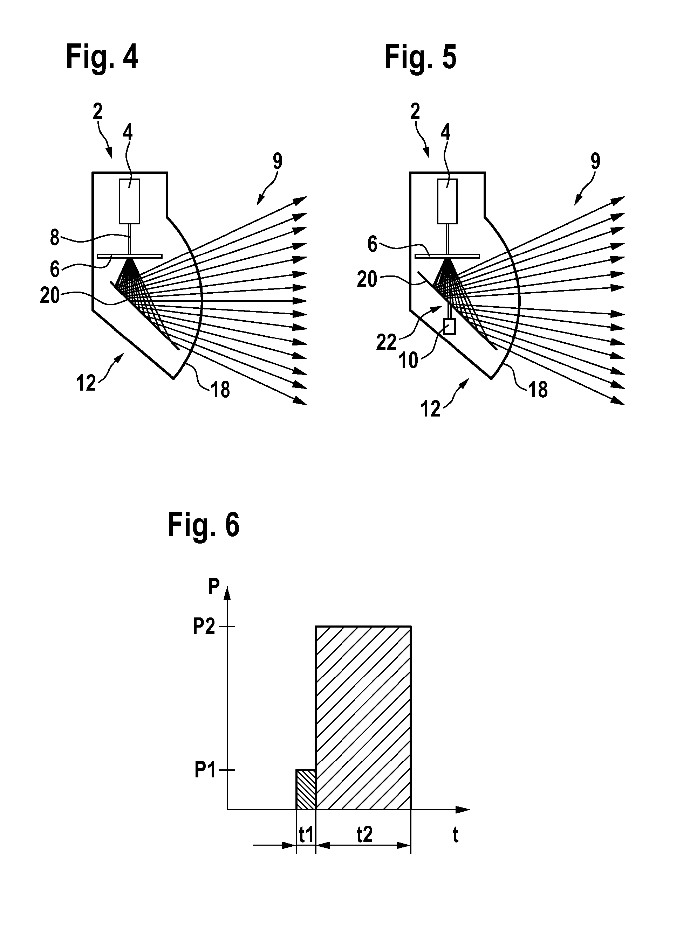

Figur 4 zeigt ein viertes Beispiel eines Laserprojektors 2, welches nicht Gegenstand der Erfindung ist.

In diesem Beispiel ist ein Reflektor 20 vorgesehen, um das gesamte von dem optischen Element 6 erzeugte Laserlichtmuster 9 umzulenken. Das Laserlichtmuster 9 wird in dem gezeigten Ausführungsbeispiel durch den Reflektor 20 in einem Winkel von 90° in Bezug auf den von der Laserlichtquelle 4 erzeugten Laserlichtstrahl 8 umgelenkt. Der in der Figur 4 gezeigte Winkel von 90° ist jedoch nur beispielhaft. Durch Drehen des Reflektors 20 um eine senkrecht zur Zeichenebene verlaufende Achse kann der gewünschte Austrittswinkel in einem weiten Bereich eingestellt werden. Die Einstellung des Reflektors 20 kann bereits bei dessen Herstellung erfolgen und der Reflektor 20 in dieser Position fixiert werden. Dabei kann die Position des Reflektors 20 besonders genau eingestellt werden. Alternativ kann der Laserprojektors 2 mit einem drehbaren Reflektor 20 ausgeliefert werden, so dass der Austrittswinkel des Laserlichtmusters 9 durch Drehen des Reflektors 20 vor Ort eingestellt und an die jeweiligen Bedürfnisse angepasst werden kann.

Durch die Verwendung eines Reflektors 20 wird die notwendige Mindestbaulänge des Laserprojektors 2 in der Austrittsrichtung des Laserlichtmusters 9 von L auf Lₙₑᵤ reduziert. Dadurch kann ein erfindungsgemäßer Laserprojektor 2 nach dem vierten Ausführungsbeispiel auch bei beengten Platzverhältnissen, wie sie z. B. in engen Werkstätten und/oder Messplätzen vorliegen, gut eingesetzt werden. Figur 5 zeigt ein fünftes Ausführungsbeispiel eines Laserprojektors 2 mit einem Reflektor 20. Der Aufbau des in der Figur 5 gezeigten Laserprojektors 2 entspricht im Wesentlichen dem in der Figur 4 gezeigten Laserprojektor 2. Anders als in dem in Figur 4 gezeigten vierten Beispiel ist in dem Reflektor 20 des fünften Ausführungsbeispiels eine Aussparung 22 vorgesehen, durch die ein Bereich des von dem optischen Element erzeugten Laserlichtmusters 9 durch den Reflektor 20 in den Raum auf der von dem optischen Element 6 abgewandten Seite des Reflektors 20 tritt.

In der Regel ist die Aussparung 22 so positioniert, dass ein Bereich des Laserlichtmusters 9, der eine besonders hohe Strahlungsintensität aufweist (Beugung 0ter Ordnung), durch die Aussparung 22 tritt und dadurch aus dem Laserlichtmuster 9 ausgeblendet wird. Durch Ausblenden eines Bereichs mit einer besonders hohen Strahlungsintensität wird die Sicherheit beim Betrieb des Laserprojektors 2 erhöht.

Der aus dem Laserlichtmuster 9 ausgeblendete Bereich trifft auf einen Detektor 10, der auf der von der Laserlichtquelle 4 abgewandten Seite des Reflektors 20 angeordnet ist. Der Detektor 10 erzeugt ein Ausgangssignal, das mit der Strahlungsintensität des auf den Detektor 10 auftreffenden Bereichs des Laserlichtmusters 9 korreliert ist. Das von dem Detektor 10 erzeugte Ausgangssignal wird von einer nicht gezeigten Auswerteinrichtung mit wenigstens einem vorgegebenen Sollwert verglichen und die Laserlichtquelle 4 wird abgeschaltet, wenn der Vergleich eine Abweichung ergibt, die einen vorgegebenen Grenzwert überschreitet.

Durch Vergleichen des von dem Detektor 10 erzeugten Ausgangssignals mit einem vorgegebenen Sollwert kann eine Fehlfunktion des Laserprojektors 2 festgestellt werden. Dadurch, dass die Laserlichtquelle 4 abgeschaltet wird, wenn eine Fehlfunktion festgestellt wird, wird die Sicherheit beim Betrieb des Laserprojektors 2 erhöht.

Figur 6 zeigt ein Diagramm, in dem die von der Laserlichtquelle 4 in einem erfindungsgemäßen Verfahren ausgesandte Lichtleistung P (y-Achse) gegenüber der Zeit t (x-Achse) aufgetragen ist.

In einem erfindungsgemäßen Verfahren wird die Laserlichtquelle 4 zunächst mit einem Vorpuls der Länge t1 angesteuert, so das sie einen Laserlichtstrahl 8 mit der Leistung P1 und der Länge t1 erzeugt. Ein Teilbereich des durch den Vorpuls erzeugten Lichtmusters 9 wird von einem Detektor 10 erfasst und einer Auswerteinrichtung zugeführt, wie es zuvor im Zusammenhang mit den Figuren 1 bis 5 beschrieben worden ist.

Wenn bei der Auswertung in der Auswerteinrichtung keine Fehlfunktion festgestellt wird, d. h., wenn der von dem Detektor 10 ermittelte Wert innerhalb eines vorgegebenen Bereichs um einen vorgegebenen Sollwert liegt, wird die Laserlichtquelle 4 mit einem Hauptpuls, der eine größere Länge t2 hat, so angesteuert, dass sie einen Laserlichtstrahl 8 mit einer erhöhten Leistung P2 und der größeren Länge t2 erzeugt. Die eigentliche Messung bzw. Projektion wird mit dem durch den Hauptpuls erzeugten Laserlichtmuster 9 durchgeführt.

Dadurch, dass vor dem eigentlichen Hauptpuls mit der großen Leistung P2 und längeren Einschaltzeit t2 zunächst ein Vorpuls mit reduzierter Leistung P1 und kürzerer Einschaltzeit t1 ausgelöst wird und das Aussenden eines Hauptpulses zuverlässig verhindert wird, wenn beim Detektieren und Auswerten des durch den Vorpuls erzeugten Laserlichtmusters 9 eine Fehlfunktion festgestellt wird, wird die Sicherheit beim Betrieb des Laserprojektors 2 erhöht.

## Patentansprüche

1. Laserprojektor (2) zur Fahrwerksvermessung, mit
einer.Laserlichtquelle (4), die zum Aussenden eines Laserlichtstrahls (8) ausgebildet ist;
einem optischen Element (6), das so ausgebildet ist, dass es ein strukturiertes Laserlichtmuster (9) mit einer Beugung 0ter Ordnung erzeugt, wenn es von dem Laserlichtstrahl (8) bestrahlt wird;
einem Detektor (10), der beim Betrieb der Laserlichtquelle (4) von wenigstens einem Teilbereich des strukturierten Laserlichtmusters (9) bestrahlt wird wobei der Detektor (10) so angeordnet ist, dass er im Betrieb von wenigstens einem Teilbereich des strukturierten Laserlichtmusters (9), welcher eine sehr hoher Strahlungsintensität durch die Beugung 0ter Ordnung aufweist, bestrahlt wird, wobei der Detektor dieser Teilbereich des strukturierten Laserlichtmusters (9) aus dem Laserlichtmuster (9) ausblendet, **dadurch gekennzeichnet, dass** der Detektor (10) ein mit der Bestrahlung korreliertes Ausgangssignal erzeugt und der Laserprojektor eine Auswerteeinrichtung aufweist, die das von dem Detektor (10) erzeugte Auswertesignal mit wenigstens einem vorgegebenen Sollwert vergleicht und die Laserlichtquelle (4) abschaltet, wenn sie eine Abweichung feststellt, die einen vorgegebenen Grenzwert überschreitet.

2. Laserprojektor (2) nach einem der vorangehenden Ansprüche mit einem Gehäuse (12), wobei wenigstens ein Bereich des Gehäuses (12) transparent ausgebildet ist und wobei der Detektor (10) innerhalb des Gehäuses (12) angeordnet ist.

3. Laserprojektor (2) nach Anspruch 2, wobei der Detektor (10) an einer Wand des Gehäuses angebracht ist.

4. Laserprojektor (2) nach einem der vorangehenden Ansprüche mit einem Reflektor (16), der so angeordnet ist, dass er einen Teilbereich des strukturierten Laserlichtmusters (9) auf den Detektor (10) umlenkt.

5. Laserprojektor nach Anspruch 4, **dadurch gekennzeichnet, dass** der Reflektor (16) an einer Wand des Gehäuses (12) angebracht ist.

6. Verfahren zum Betrieb eines Laserprojektors (2) nach einem der vorhergehenden Ansprüche, **dadurch gekennzeichnet, dass**
die Laserlichtquelle (4) mit einem Vorpuls so angesteuert wird, dass sie Laserlicht mit einer ersten Intensität aussendet,
wenigstens ein Teil des durch den Vorpuls erzeugten Laserlichts von dem Detektor (10) erfasst wird
und ein von dem Detektor (10) erzeugtes Ausgangssignal von einer Auswerteinheit ausgewertet wird, und wobei,
wenn der vom Detektor ermittelte Wert innerhalb eines vorgegebenen Bereiches um einen vorgegebenen Sollwert liegt, wird die Laserlichtquelle (4) mit einem Hauptpuls so angesteuert, dass sie Laserlicht mit einer zweiten Intensität aussendet, wobei die zweite Intensität größer als die erste Intensität ist und/oder der Hauptpuls länger als der Vorpuls ist, und wobei die Laserlichtquelle (4) abgeschaltet wird, wenn die Auswerteeinheit eine Abweichung von dem vorgegebenen Sollwert feststellt, die einen vorgegebenen Grenzwert überschreitet.

## Claims

1. Laser projector (2) for chassis measurement, comprising
a laser light source (4) which is embodied for emitting a laser light beam (8);
an optical element (6) which is embodied in such a way that it generates a structured laser light pattern (9) with a zeroth order of diffraction when it is irradiated by the laser light beam (8);
a detector (10) which is irradiated by at least a portion of the structured laser light pattern (9) when the laser light source (4) is an operation, wherein the detector (10) is disposed in such a way that it is irradiated by the at least one portion of the structured laser light pattern (9) with a very high radiation intensity as a result of the zeroth order of diffraction during operation, wherein the detector
masks this portion of the structured laser light pattern (9) from the laser light pattern (9), **characterized in that** the detector (10) generates an output signal correlated to the radiation and the laser projector comprises an evaluation apparatus which compares the evaluation signal generated by the detector (10) with at least one predetermined intended value and switches the laser light source (4) off if it determines a deviation which exceeds a predetermined limit value.

2. Laser projector (2) according to Claim 1, comprising a housing (12), wherein at least one region of the housing (12) has a transparent embodiment and wherein the detector (10) is disposed within the housing (12).

3. Laser projector (2) according to Claim 2, wherein the detector (10) is fastened to a wall of the housing.

4. Laser projector (2) according to one of the preceding claims, comprising a reflector (16) which is disposed in such a way that it deflects a portion of the structured laser light pattern (9) onto the detector (10).

5. Laser projector according to Claim 4, **characterized in that** the reflector (16) is fastened to a wall of the housing (12).

6. Method for operating a laser projector (2) according to one of the preceding claims, **characterized in that**
the laser light source (4) is actuated by a pre-pulse in such a way that it emits laser light with a first intensity,
at least some of the laser light generated by the pre-pulse is registered by the detector (10)
and an output signal generated by the detector (10) is evaluated by an evaluation unit and wherein,
when the value established by the detector lies within a predetermined range about a predetermined intended value, the laser light source (4) is actuated by a main pulse in such a way that it emits laser light with a second intensity, wherein the second intensity is greater than the first intensity and/or the main pulse is longer than the pre-pulse, and wherein the laser light source (4) is switched off if the evaluation unit determines a deviation from the predetermined intended value which exceeds a predetermined limit value.

## Revendications

1. Projecteur à laser (2) pour la mesure d'un système de suspension, avec :
une source de laser lumineuse (4) réalisée pour émettre un faisceau de lumière laser (8) ;
un élément optique (6) réalisé de telle sorte qu'il réalise un motif de lumière laser (9) structuré avec une flexion ou un ordonnancement lorsqu'il est éclairé par le faisceau de lumière laser (8) ;
un détecteur (10) éclairé en situation de fonctionnement de la source de laser lumineuse (4) par au moins une zone partielle du modèle de lumière laser (9) structuré, le détecteur (10) étant disposé de telle sorte qu'il est éclairé en fonctionnement par au moins une zone partielle du modèle de lumière laser (9) structuré comportant une intensité de rayonnement très élevée par la flexion ou l'ordonnancement, le détecteur de cette zone partielle du modèle de lumière laser (9) structuré étant masqué par rapport au motif de lumière laser (9) ;
**caractérisé en ce que** le détecteur (10) produit un signal de sortie corrélé au rayonnement et que le projecteur à laser comporte un dispositif d'analyse qui compare le signal d'analyse produit par le détecteur (10) à au moins une valeur théorique prédéfinie et déconnecte la source de laser lumineuse (4) lorsqu'il détecte un écart dépassant une valeur limite prédéfinie.

2. Projecteur à laser (2) selon la revendication 1, avec un carter (12), au moins une zone du carter (12) étant réalisée de façon transparente et le détecteur (10) étant disposé à l'intérieur du carter (12).

3. Projecteur à laser (2) selon la revendication 2, le détecteur (10) étant placé au niveau d'une paroi du carter.

4. Projecteur à laser (2) selon l'une quelconque des revendications précédentes, avec un réflecteur (16) disposé de telle sorte qu'il dévie une zone partielle du modèle de lumière laser (9) structuré sur le détecteur (10).

5. Projecteur à laser selon la revendication 4, **caractérisé en ce que** le réflecteur (16) est placé au niveau d'une paroi du carter (12).

6. Procédé d'actionnement d'un projecteur à laser (2) selon l'une quelconque des revendications précédentes, **caractérisé en ce que** :
la source de laser lumineuse (4) dotée d'une pré-impulsion est commandée de telle sorte qu'elle émet la lumière laser à une première intensité ;
au moins une partie de la lumière laser produite par la pré-impulsion est détectée par le détecteur (10) ; et
un signal de sortie produit par le détecteur (10) est analysé par une unité d'analyse ; et
lorsque la valeur déterminée par le détecteur se situe à l'intérieur d'une plage prédéfinie autour d'une valeur théorique prédéfinie, la source de laser lumineuse (4) étant commandée de telle sorte avec une impulsion principale qu'elle émet la lumière laser à une deuxième intensité, la deuxième intensité étant supérieure à la première intensité et/ou l'impulsion principale étant plus longue que la pré-impulsion et la source de laser lumineuse (4) étant déconnectée lorsque l'unité d'analyse détecte un écart par rapport à la valeur théorique prédéfinie dépassant la valeur limite prédéfinie.
